Europäisches Patentamt

European Patent Office

Office européen des brevets

(11) Veröffentlichungsnummer: **0 214 607 B1**

# EUROPÄISCHE PATENTSCHRIFT

(45) Veröffentlichungstag der Patentschrift: **27.05.92**

(51) Int. Cl.⁵: **H04N 5/33**

(21) Anmeldenummer: **86112163.0**

(22) Anmeldetag: **03.09.86**

(54) **Vorrichtung zur Erzeugung eines bildes, einer Szene, vorzugsweise eines Wärmebildes.**

(30) Priorität: **05.09.85 DE 3531666**

(43) Veröffentlichungstag der Anmeldung:
**18.03.87 Patentblatt 87/12**

(45) Bekanntmachung des Hinweises auf die
Patenterteilung:
**27.05.92 Patentblatt 92/22**

(84) Benannte Vertragsstaaten:
**AT CH DE GB IT LI NL**

(56) Entgegenhaltungen:
**DE-C- 3 329 588**

(73) Patentinhaber: **Firma Carl Zeiss**

**W-7920 Heidenheim (Brenz)(DE)**

(84) Benannte Vertragsstaaten:
**CH DE IT LI NL AT**

(73) Patentinhaber: **CARL ZEISS-STIFTUNG HAN-
DELND ALS CARL ZEISS**

**W-7920 Heidenheim (Brenz)(DE)**

(84) Benannte Vertragsstaaten:
**GB**

(72) Erfinder: **Poxleitner, Martin**
**Pestalozzistrasse 1**
**W-7923 Königsbronn(DE)**
Erfinder: **Wohlfrom, Josef**
**Kopernikusstrasse 84**
**W-7082 Oberkochen(DE)**
Erfinder: **Otomanski, Kurt**
**Mohlstrasse 35**
**W-7080 Aalen(DE)**

**Beschreibung**

Die vorliegende Erfindung betrifft eine Vorrichtung zur Erzeugung eines Bildes einer Szene, vorzugsweise eines Wärmebildes nach dem Oberbegriff des Anspruchs 1.

Eine solche Vorrichtung ist beispielsweise aus der GB-PS 1 435 144 bekannt; sie findet dort als Wärmebildgerät Verwendung. Bei diesem Gerät wird das Wärmebild bidirektional abgetastet, d.h. sowohl beim Hin- als auch beim Rücklauf des Abtastspiegels. Dieser ist um zwei Achsen verschwenkbar und wird so angesteuert, daß das Wärmebild zeilenweise abgetastet wird, wobei aufeinanderfolgende Zeilen senkrecht zur Zeilenrichtung räumlich auseinanderliegen. Das bekannte Gerät arbeitet nach dem sogenannten Zweifach-Zeilensprung, wobei der Abtastspiegel im Endpunkt einer Abtastbewegung, z.B. dem Hinlauf um einen kleinen Betrag gekippt wird und im Endpunkt der folgenden Abtastbewegung, z.B. also dem Rücklauf wieder um diesen Betrag zurückkippt.

Durch diese Art der Abtastung wird die Auflösung in Richtung der Detektorreihe verbessert, beispielsweise werden mit 120 Detektoren in einer Reihe 240 Abtastzeilen erreicht. Zur Erzeugung des sichtbaren Bildes dienen lichtemittierende Elemente, die ebenso wie die Detektoren in Reihe angeordnet sind.

Jeder einzelne Detektor des Reihendetektors ist über Verstärker einem lichtemittierenden Element zugeordnet. Infolge der endlichen elektrischen Bandbreite dieser Verstärkerkette tritt eine Phasenverschiebung zwischen den von den Detektoren erzeugten und den den lichtemittierenden Elementen zugeführten Signalen auf. Dadurch bedingt leuchten die lichtemittierenden Elemente verzögert auf. Dies würde bei unidirektionaler Abtastung nicht störend in Erscheinung treten, bei bidirektionaler tritt infolge der unterschiedlichen Abtastrichtungen jedoch ein sehr störender Effekt auf. So würde ein Balkenziel bei einer beispielsweise von links nach rechts verlaufenden Abtastrichtung nach rechts versetzt wiedergegeben, in der folgenden Abtastzeile dagegen nach links versetzt. Das in Wirklichkeit eine gerade Linie bildende Ziel wurde als mäanderförmig wiedergegeben.

Zur Behebung dieses störenden Effektes ist bei dem aus der GB-PS 1 435 144 bekannten Wärmebildgerät der Abtastspiegel in einem Gehäuse angeordnet, das um eine Achse kippbar ist, die mit der Zeilenabtastachse einen Winkel von ca. 45° bildet. Das Gehäuse ist fest mit einer Linse verbunden, welche dazu dient, das von den lichtemittierenden Elementen kommende Licht in eine Bildebene abzubilden. Wird nun im Endpunkt einer Abtastbewegung das Gehäuse und damit der Spiegel gekippt, so entsteht eine Bewegungskomponente, welche das Gehäuse um einen kleinen Betrag in Zeilenabtastrichtung schwenkt. Damit schwenkt auch die mit diesem verbundene Linse. Alle Komponenten sind so aufeinander abgestimmt, daß diese Zusatz-Verschwenkung der Linse das Bild in der Bildebene genau um den Betrag verschiebt, der den durch die Phasenverschiebung des Signals hervorgerufenen Phasenfehler kompensiert.

Es ist offensichtlich, daß eine solche Kompensationsvorrichtung sehr schwer einwandfrei zu justieren ist und einer sehr genauen Abstimmung zwischen den elektrisch und den optisch hervorgerufenen Effekten bedarf. Außerdem ist diese Vorrichtung nur für den Zweifach-Zeilensprung verwendbar, da eine Kompensation nur in zwei, dem Hin- und dem Rücklauf des Abtastspiegels entsprechenden Lagen der Abtastzeilen möglich ist.

Eine andere Vorrichtung zur Kompensation des durch die Phasenverschiebung des elektrischen Signals hervorgerufenen Phasenfehlers ist aus der DE-PS 2 805 531 bekannt. Dort sind zur Erzeugung des sichtbaren Bildes zwei Reihen von lichtemittierenden Elementen vorgesehen, die seitlich entsprechend dem zu kompensierenden Fehler gegeneinander versetzt sind und die beim Hin- und Rücklauf des Abtastspiegels getrennt angesteuert werden.

Diese Vorrichtung hat den Nachteil, daß die Zahl der lichtemittierenden Elementen gegenüber der Zahl der Detektoren verdoppelt ist, so daß auch die Zahl der Verstärker und elektrischen Verbindungen verdoppelt werden muß, ganz abgesehen von sonstigen elektronischem Aufwand zur Verstärkerumschaltung.

Ist dieser Aufwand bei einer Vorrichtung noch tragbar, die nach dem Zweifach-Zeilensprungverfahren arbeitet, so wird der Aufwand zu hoch, wenn man die Auflösung in Richtung der Detektorreihe weiter verbessern will.

Es ist nun die Aufgabe der vorliegenden Erfindung, eine nach dem Oberbegriff des Anspruchs 1 aufgebaute Vorrichtung zur Erzeugung eines Bildes einer Szene, vorzugsweise eines Wärmebildes, so auszugestalten, daß bei möglichst kleinem Aufwand für die Kompensation des Phasenfehlers eine weitere Verbesserung der Vertikal-Auflösung und damit der geometrischen Auflösung erreicht wird.

Diese Aufgabe wird entsprechend dem Kennzeichen des Anspruchs 1 gelöst.

Das Korrekturglied nach der Erfindung ist vom Abtastspiegel mechanisch völlig entkoppelt. Dadurch ist es möglich, dieses Glied so anzuordnen und anzusteuern, daß die von ihm ausgeübte Ablenkwirkung für das von den lichtemittierenden Elementen ausgehende Licht nur den Abtastrichtungen zugeordnet ist, und zwar völlig unabhängig von der Lage der jeweiligen Abtastzeile.

Damit wird der Vorteil erreicht, daß die Vorrichtung nach der Erfindung mit einer gewünschten Vertikal-Auflösung des erzeugten Bildes betrieben werden kann, ohne daß am Korrekturglied selbst irgendwelche Änderungen erforderlich werden. Die Vorrichtung kann also insbesondere ohne Zeilensprung, nach dem Zweifach-Zeilensprung oder auch nach dem VierfachZeilensprung betrieben werden. In jeder Betriebsart kompensiert das Korrekturglied die von der Phasen-Verzögerung der elektrischen Signale ausgelösten Effekte vollständig.

Anspruch 2 gibt eine besonders vorteilhafte Ausführungsform der Erfindung an. Diese Ausbildung ist einfach aufgebaut, arbeitet einwandfrei und bietet keine Schwierigkeiten bei der Montage und Justierung.

Weitere zweckmäßige Ausführungsformen sind Gegenstand der Ansprüche 3 und 4.

Anspruch 5 gibt eine Ausführungsform der Vorrichtung nach der Erfindung an, die sich durch eine gute Vertikalauflösung auszeichnet und bei der das Korrekturglied nach den vorhergehenden Ansprüchen besonders vorteilhafte Anwendung findet.

Die Erfindung wird im folgenden anhand der Figuren 1-6 der beigefügten Zeichnungen näher erläutert. Im einzelnen zeigen:

Fig. 1 ein Wärmebildgerät in schematischer Darstellung;

Fig. 2 a-e verschiedene Phasen einer Bildabtastung mit Vierfach-Zeilensprung;

Fig. 3 die bei bidirektionaler Bildabtastung auftretenden Signale;

Fig. 4 ein Ausführungsbeispiel der erfindungsgemäßen Vorrichtung in schematischer Darstellung;

Fig. 5 ein Ausführungsbeispiel des im Gerät der Fig. 4 verwendeten Korrekturgliedes;

Fig. 6 a-e den zeitlichen Verlauf der Signale zur Ansteuerung des Abtastspiegels und des Korrekturgliedes der in Fig. 4 dargestellten Vorrichtung.

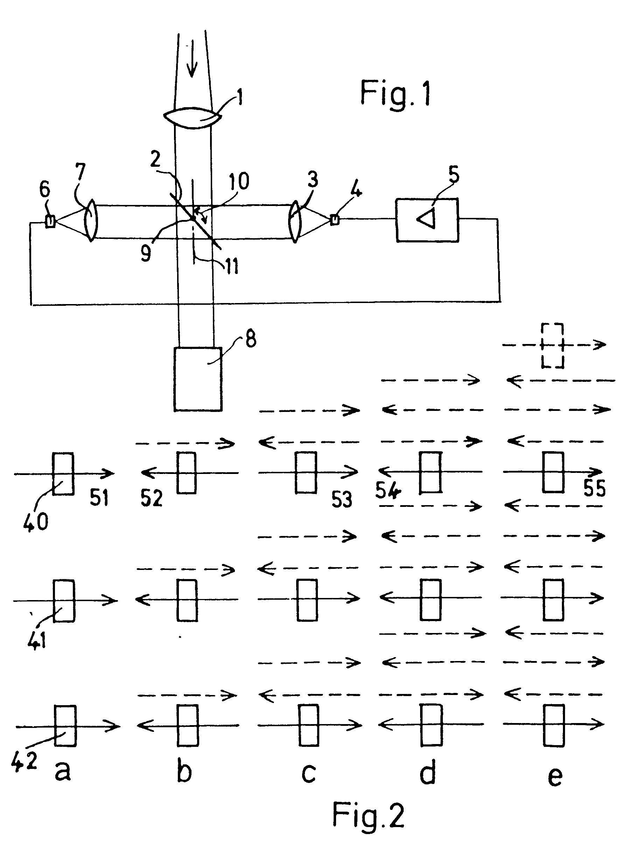

Bei dem in Fig. 1 dargestellten Wärmebildgerät ist mit 1 eine Eingangsoptik bezeichnet, welche die von der Szene kommende Wärmestrahlung über einen Abtastspiegel 2 und eine weitere Optik 3 in die Ebene einer Detektorreihe 4 abbildet. Diese Detektorreihe 4 besteht aus einzelnen, in einer Reihe angeordneten Infrarot-Detektoren. In der Darstellung der Fig. 1 ist diese Detektorreihe senkrecht zur Zeichenebene angeordnet.

Jeder einzelne Detektor ist über eine schematisch dargestellte Verstärkerkette 5 mit einem lichtemittierenden Element 6 verbunden, das beispielsweise als lichtemittierende Diode ausgebildet sein kann. Solche Dioden sind in einer Reihe angeordnet, die in der Darstellung der Fig. 1 wieder senkrecht zur Zeichenebene zu denken ist. Die Zahl der lichtemittierenden Elemente 6 entspricht der Zahl der Einzeldetektoren 4. Das von den Elementen 6 ausgehende Licht wird über eine Optik 7 in einen Parallelstrahlengang umgewandelt, der von der Rückseite des Abtastspiegels 2 auf ein Bildbetrachtungsgerät 8 umgelenkt wird. Das Gerät 8 kann beispielsweise als Bildverstärker oder als Teleskop ausgebildet sein.

Beim Betrieb des Wärmebildgerätes wird der Abtastspiegel 2 um die parallel zur Detektorreihe 4 liegende Achse 9 verschwenkt, und zwar im Sinne des Pfeiles 10. Dadurch wird das Wärmebild in Zeilenrichtung über die Detektorreihe 4 bewegt, so daß jeder Detektor dieser Reihe ein einer Bildzeile zugeordnetes Videosignal erzeugt. Dieses Videosignal steuert die Helligkeit des zugeordneten lichtemittierenden Elementes 6, d.h. für jeden abgetasteten Bildpunkt wird das nicht sichtbare, von der Szene kommende IR-Bildsignal in ein sichtbares Signal umgewandelt. Das von den lichtemittierenden Elementen 6 ausgehende Licht wird von der Rückseite des Abtastspiegels 2 umgelenkt, so daß also das im Bildbetrachtungsgerät 8 erzeugte Bild unabhängig von irgendwelchen Schwankungen in der Abtastbewegung des Spiegels 2 ist.

Der Abtastspiegel 2 ist ferner um eine Achse 11 kippbar, und zwar um sehr kleine Beträge. Durch eine solche Kippung wird erreicht, daß die während des Hin- und des Rücklaufs des Abtastspiegels 2 durchfahrenen Abtastzeilen senkrecht zur Zeilenrichtung auseinanderliegen, wie dies für das Zeilensprung-Verfahren erforderlich ist. Üblicherweise wird nach den Zweifach-Zeilensprung gearbeitet, d.h. die Abtastzeilen nehmen bei der hier dargestellten Vorrichtung während des Hin- und des Rücklaufs des Abtastspiegels 2 unterschiedliche Lagen ein.

Bei dem in Fig. 1 dargestellten Gerät erfolgt die Abtastung und der Aufbau des Bildes bidirektional, d.h. während des Hin- und des Rücklaufs des Abtastspiegels 2.

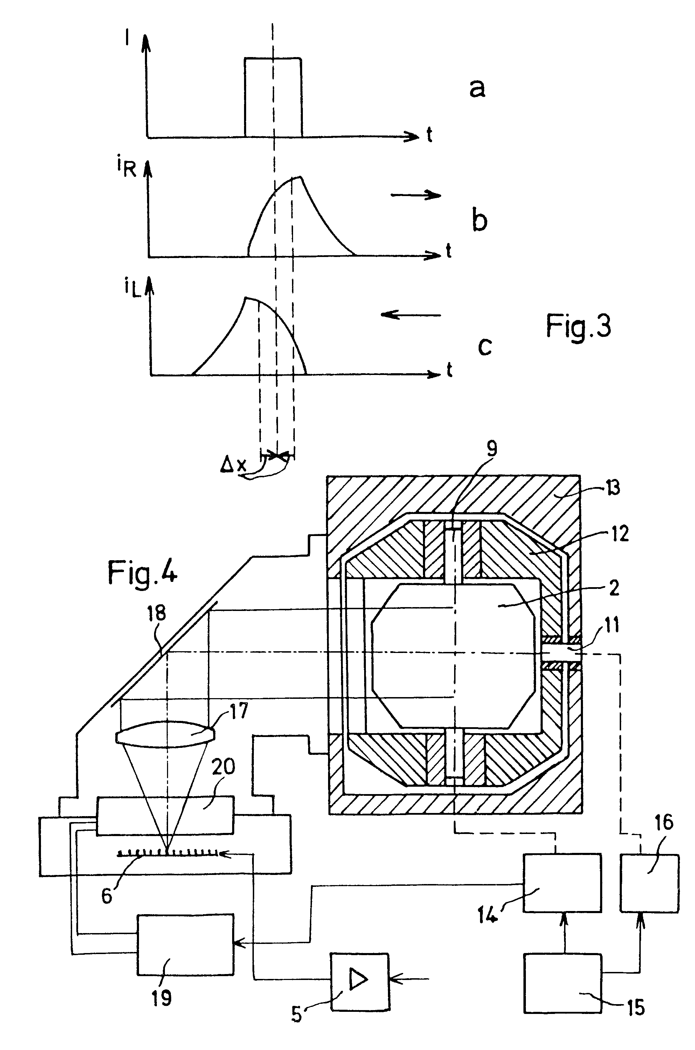

Enthält das aufzunehmende Wärmebild beispielsweise einen Bereich hoher Strahlungsintensität I, so ergibt sich bei der Abtastung des Bildes der in Fig. 3a dargestellte zeitliche Intensitätsverlauf. Das vom überfahrenen IR-Detektor 4 erzeugte Signal entspricht im wesentlichen diesem Verlauf. Es wird der Verstärkerkette 5 zugeführt, die eine endliche elektrische Bandbreite aufweist. Dadurch bedingt tritt die in den Figuren 3b und 3c dargestellte Phasenverschiebung zwischen dem vom Detektor 4 erzeugten und dem der zugeordneten lichtemittierenden Diode 6 zugeführten Signale auf. Man erkennt, daß sich die Schwerpunkte der dargestellten Signale während des Hinlaufs (Fig. 3b) und des Rücklaufs (Fig. 3c) der Abtastung jeweils um einen Betrag $\triangle x$ gegenüber dem Schwerpunkt des tatsächlich darzustellenden Signales der Fig.

3a verschiebt. Dieser Fehler wird als Phasenfehler bezeichnet.

Um die Bildauflösung in Richtung der Detektorreihe 4 zu vergrößern, wird bei Wärmebildgeräten üblicherweise nach dem Zeilensprungverfahren gearbeitet. Dabei ist es üblich, den Zweifach-Zeilensprung anzuwenden, d.h. die Zahl der Abtastzeilen zu verdoppeln.

Die Figuren 2 a bis e zeigen nun verschiedene Phasen einer Bildabtastung nach dem Vierfach-Zeilensprungverfahren. Ein solches Verfahren war bisher nicht durchführbar, da die Mittel zur Korrektur der Phasenfehler nicht zur Verfügung standen.

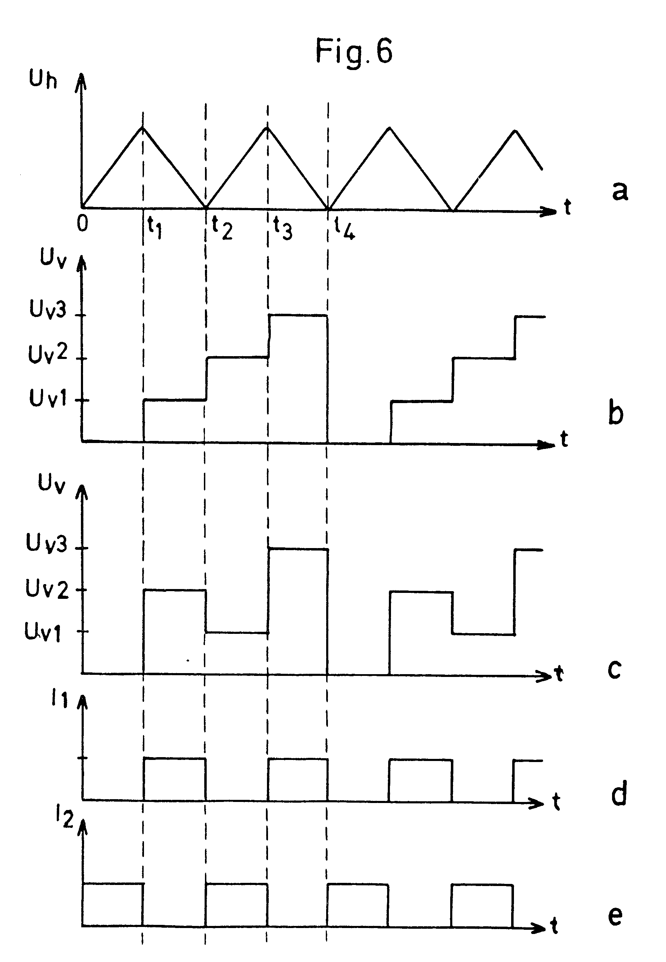

In Fig. 2 sind die verschiedenen Abtastphasen anhand der beispielsweise ausgewählten Detektoren 40, 41, 42 der Detektorreihe 4 dargestellt. Die entsprechenden zur Steuerung des Abtastspiegels 2 dienenden Signale sind in den Figuren 6a und 6b gezeigt.

In der ersten Abtastphase der Fig. 2a wird der Abtastspiegel 2 um die Achse 9 geschwenkt und bewegt das Wärmebild entlang der ersten Abtastzeile 51 über die Detektoren. Im Endpunkt des Spiegelhinlaufs, d.h. zum Zeitpunkt $t_1$ wird der Abtastspiegel 2 durch Zuführen des Signals $U_{v1}$ der Fig. 6b um die Achse 11 gekippt, so daß während des folgenden Rücklaufes die Abtastzeile 52 durchfahren wird. Die Lage der zuvor durchfahrenen Abtastzeile ist in Fig. 2b gestrichelt dargestellt. Zum Zeitpunkt $t_2$ wird der Abtastspiegel 2 durch Zuführen des Signals $U_{v2}$ um einen weiteren Betrag um die Achse 11 gekippt. Während der nun folgenden dritten Abtastzeile, die während der Zeitpunkte $t_2$ und $t_3$ durchlaufen wird, wird die dritte Abtastzeile 53 über die Detektoren geführt. Fig. 2c zeigt gestrichelt die Lage der zuvor durchlaufenen Abtastzeilen. Zum Zeitpunkt $t_3$ wird der Abtastspiegel 2 durch Zuführen des Signals $U_{v3}$ um einen weiteren Winkelbetrag gekippt und durchläuft während der folgenden Abtastbewegung die Abtastzeile 54 der Fig. 2d. Auch in dieser Figur sind die zuvor durchlaufenen Abtastzeilen gestrichelt dargestellt. Nach Beendigung eines Ablaufzyklus zum Zeitpunkt $t_4$ wird durch das Signal der Fig. 6b der Spiegel 2 um die Achse 11 zurückgekippt, so daß die im darauffolgenden Abtastvorgang zuerst durchlaufene Abtastzeile 55 wieder mit der Abtastzeile 51 übereinstimmt.

Man erkennt aus Fig. 2, daß, verglichen mit der Anzahl der Detektoren 4, die Zahl der durchlaufenen Abtastzeilen vervierfacht wird. Enthält die Detektorzeile 4 beispielsweise 120 Einzeldetektoren, so werden 480 Abtastzeilen durchlaufen, d.h. die Vertikalauflösung des Bildes wird wesentlich verbessert.

Bei dem in Fig. 4 dargestellten Ausführungsbeispiel ist der Abtastspiegel 2 in einem Spiegelrahmen 12 um die Achse 9 verschwenkbar gelagert. Die Verschwenkung des Spiegels wird über eine schematisch dargestellte Vorrichtung 14, welche beispielsweise als Motor ausgebildet sein kann, bewirkt. Dieser Vorrichtung wird von einer Steueranordnung 15 das in Fig. 6a dargestellte Signal zugeführt. Der Spiegelrahmen 12 ist in einem festen Rahmen 13 um eine Achse 11 kippbar. Diese Kippung wird mittels einer Vorrichtung 16, welche beispielsweise als Motor ausgebildet sein kann, bewirkt. Der Vorrichtung 16 wird über die Steueranordnung 15 beispielsweise das in Fig. 6b dargestellte Signal zugeführt.

Vom Abtastspiegel 2 wird die vom Wärmebild ausgehende Strahlung auf eine in Fig. 4 nicht sichtbare Detektorreihe abgelenkt. Das von dieser Detektorreihe kommende Signal wird über eine Verstärkerkette 5 den in einer Reihe angeordneten lichtemittierenden Dioden 6 zugeführt. Das von diesen Dioden erzeugte Licht wird von einer schematisch dargestellten Optik 17 nach Unendlich abgebildet und über einen Umlenkspiegel 18 auf die Rückseite des Abtastspiegels 2 geworfen. Von dort gelangt das Licht auf die in dieser Darstellung nicht sichtbaren Beobachtungseinrichtung 8 der Fig. 1.

Im konvergenten Strahlengang zwischen der Optik 17 und den lichtemittierenden Dioden 6 ist ein Korrekturglied 20 angeordnet, welches zur korrektur der Phasenfehler dient. Dieses Korrekturglied besteht aus einem optischen Ablenkelement und elektrischen Mitteln 19 zum alternierenden verschwenken dieses Elementes in zwei definierte Lagen. Die Anordnung 19 wird über die Vorrichtung 14 synchronisiert, welche zum Verschwenken des Spiegels 2 um die Achse 9 dient.

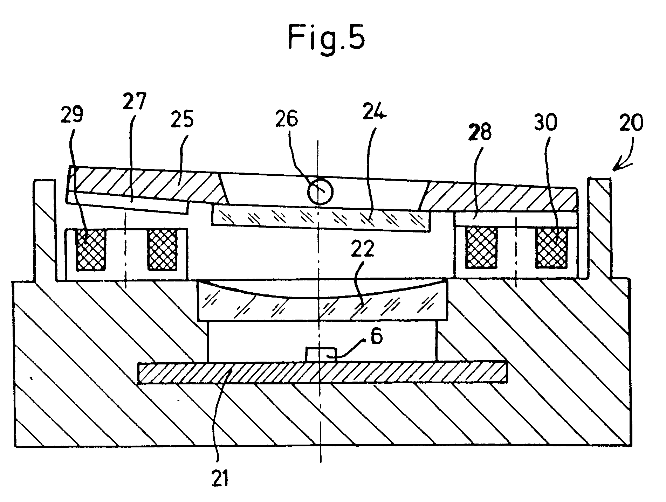

Eine ganz besonders vorteilhafte Ausgestaltung des Korrekturgliedes 20 ist in Fig. 5 dargestellt. Hier ist wieder mit 6 eine lichtemittierende Diode bezeichnet, welche auf einem Substrat 21 angeordnet ist. Die licht- emittierenden Dioden sind in einer Reihe angeordnet, welche in der Darstellung der Fig. 5 senkrecht zur Zeichenebene liegt. In Strahlrichtung gesehen hinter der Diode 6 ist Linse 22 angeordnet. Das eigentliche Korrekturglied besteht aus einer planparallelen Platte 24, welche auf einem Träger 25 um eine Achse 26 kippbar angeordnet ist. Der Träger 25 ist mit zwei Magnetankern 27 und 28 versehen, welche mit den beiden Elektromagneten 29 und 30 zusammenwirken.

Dem Elektromagneten 29 wird über die Steueranordnung 19 ein Strom zugeführt, dessen zeitlicher Verlauf aus Fig. 6d ersichtlich ist. Der zeitliche Verlauf des dem Elektromagneten 30 zugeführten Stromes $I_2$ ist aus Fig. 6e ersichtlich. Man erkennt aus dieser Darstellung, daß die planparallele Platte 24 alternierend zwei definierte Winkelstellungen einnimmt und in diesen das von den lichtemittierenden Dioden 6 ausgehende Licht jeweils um einen Betrag $\triangle x$ (s. Fig. 3c) ablenkt.

Eine Winkelstellung der planparallelen Platte 24 ist jeweils dem Hinlauf des Abtastspiegels 2 zugeordnet, d.h. also, den Ablenksignalen der Fig. 6a wahrend der Zeitpunkte 0 bis $t_1$ und $t_2$ bis $t_3$. Die andere Winkelstellung der planparallelen Platte 24 ist dem Rücklauf des Ablenspiegels zugeordnet, d.h. den Signalabschnitten der Fig. 6a während der Zeitpunkte $t_1$ bis $t_2$ und $t_3$ bis $t_4$. Diese Zuordnung ist völlig unabhängig von den Signalen der Fig. 6b, d.h. sie ist völlig unabhängig von der Kipplage des Winkelspiegels 2 bezüglich der Achse 11.

Damit wird klar, daß das dargestellte und beschriebene Korrekturglied universell einsetzbar ist, und zwar unabhängig davon, ob das Wärmebildgerät ohne Zeilensprung, nach dem Zweifach-Zeilensprung oder nach dem Vierfach-Zeilensprung betrieben wird. Auch jedes andere Zeilensprungverfahren ist möglich, ohne daß eine Änderung des Korrekturgliedes und seiner Ansteuermittel notwendig ist.

Das Korrekturglied der Fig. 5 findet vorteilhafte Anwendung bei einem Wärmebildgerät, welches nach dem Vierfach-Zeilensprungverfahren der Fig. 2 betrieben wird. Werden bei diesem Verfahren der Steuervorrichtung 16 des Ablenkspiegels 2 Signale gemäß Fig. 6b zugeführt, so erfolgt die Abtastung wie in Fig. 2 dargestellt, d.h. nach dem Schema 1, 2, 3, 4. Es ist auch möglich, der Steuervorrichtung 16 ein Signal zuzuführen, dessen Verlauf aus Fig. 6c ersichtlich ist. Die Abtastung erfolgt dann ebenfalls nach dem Vierfach-Zeilensprungverfahren wobei das Abtastschema jetzt 1, 3, 2, 4 ist.

Anstelle des Korrekturgliedes der Fig. 5 können auch andere Ablenkelemente verwendet werden. So ist es beispielsweise möglich, den Umlenkspiegel 18 der Fig. 4 in zwei definierte, jeweils dem Hin- und Rücklauf des Abtastspiegels 2 zugeordnete Winkelstellungen zu kippen.

Auch die Verwendung anderer Ablenkelemente ist möglich, beispielsweise die Verwendung eines Schiebelinsenmikrometers im Parallelstrahlengang zwischen Spiegel 2 und Optik 17. Ein solches Schiebelinsenmikrometer besteht aus zwei Linsen, von denen die eine fest angeordnet ist, während die andere zwei definierte Verschiebestellungen einnimmt.

**Patentansprüche**

1. Vorrichtung zur Erzeugung eines Bildes einer Szene, vorzugsweise eines Wärmebildes mit einer Optik (1) zur Abbildung der Szene in die Ebene eines Vielelement-Reihendetektors (4) einem Abtastspiegel (2), der das Szenenbild senkrecht zur Detektorreihe (4) periodisch hin- und herbewegt und es während zeitlich aufeinanderfolgender Abtastbewegungen entlang Abtastzeilen führt, die senkrecht zur Zeilenrichtung räumlich auseinanderliegen, ferner mit einer in Reihe angeordneten Vielzahl lichtemittierender Elemente (6), deren jedes Einzelelement über einen Verstärker (5) einem Einzeldetektor des Reihendetektors (4) zugeordnet ist, wobei das von diesen Elementen emittierte Licht über den Abtastspiegel (2) einem Beobachter (8) zugeführt ist, und mit einem optischen Korrekturglied (20), das die von den lichtemittierenden Elementen (6) ausgehende Strahlung während nacheinander durchlaufener Abtastzeilen um einen vorbestimmten Winkel gegenläufig auslenkt und aus einem optischen Ablenkelement und elektrischen Mitteln zum alternierenden Verschwenken dieses Elementes in zwei definierte Lagen besteht, daß es im Strahlengang zwischen den lichtemittierenden Elementen (6) und dem Abtastspiegel (2) angeordnet ist und von den die Zeilenabtastung des Abtastspiegels (2) bewirkenden Signalen (14) gesteuert ist, dadurch gekennzeichnet, daß das Korrekturglied (20) vom Abtastspiegel (2) mechanisch völlig entkoppelt und von einer Verschwenkeinrichtung verschwenkbar ist, wobei die Steuersignale für diese Verschwenkbewegung von der Verschwenkbewegung des Abtastspiegels (2) abgeleitet sind.

2. Vorrichtung nach Anspruch 1, dadurch gekennzeichnet, daß das optische Ablenkelement als eine im konvergenten Strahlengang zwischen den lichtemittierenden Elementen (6) und dem Abtastspiegel (2) angeordnete Planparallel-Platte (24) ausgebildet ist, und daß Elektromagnete (27-30) zum alternierenden Verschwenken dieser Platte (24) in zwei verschiedene Winkelstellungen vorgesehen sind.

3. Vorrichtung nach Anspruch 1, dadurch gekennzeichnet, daß das optische Ablenkelement als ein im Parallelstrahlengang zwischen den lichtemittierenden Elementen (6) und dem Ablenkspiegel (2) angeordneter Reflexionsspiegel (18) ausgebildet ist, und daß Elektromagnete zum alternierenden Verschwenken dieses Spiegels in zwei verschiedene Winkelstellungen vorgesehen sind.

4. Vorrichtung nach Anspruch 1, dadurch gekennzeichnet, daß das optische Ablenkelement als ein im Parallelstrahlengang zwischen den lichtemittierenden Elementen (6) und dem Abtastspiegel (2) angeordnetes Schiebelinsenmikrometer ausgebildet ist, und daß Elektromagnete zum alternierenden Verschieben einer Linse dieses Mikrometers in zwei verschiedene Stellungen vorgesehen sind.

**5.** Vorrichtung nach Anspruch 1 und einem der Ansprüche 2-4, gekennzeichnet durch eine Anordnung (15) zur Steuerung des Abtastspiegels (2), so daß vier aufeinanderfolgende Abtastbewegungen entlang von vier senkrecht zur Zeilenrichtung räumlich auseinanderliegenden, zwischen benachbarten Detektoren (40, 41) der Detektorenreihe (4) gelegenen Zeilen (51-54) ausgeführt werden.

## Claims

**1.** Device for generating an image of a scene preferably a heat image with imaging means (1) for forming an image of the scene in the plane of a linear array of detectors (4), a scanning mirror (2) for deflecting said image through a forward pass and a return pass in a direction perpendicular to said detectors (4) and along successive scan lines spaced one from te other in a direction perpendicular to said scan lines, further with an array of light-emitting elements (6) being arranged in series, each single element of which being connected via an amplifier (5) to one of said detectors (4), whereby the light emitted by said elements is directed via said scanning mirror (2) to an observer (8), and with optical correcting means (20) for deflecting said light rays by a predetermined angle after each pass through one of said scan lines with each successive deflection of said light rays being opposite to the immediate preceding deflection thereof, said correcting means (20) including optical deflecting means disposed in the path of said light rays between said light-emitting elements (6) and said scanning mirror (2) and controlled by the signals (14) which effect the line scanning of the scanning mirror (2), characterized in that the correcting means (20) is entirely mechanically uncoupled from the scanning mirror (2) and pivotably mounted, whereby the controlling signals for this pivoting is derived from the pivoting of the scanning mirror (2).

**2.** Device according to claim 1, characterized in that said optical deflecting means is a flat plate (24) arranged in the convergent beam of light between the light emitting elements (6) and the scanning mirror (2) and that electromagnetic means (27-30) are provided for alternately pivoting said flat plate (24) into two different angular positions.

**3.** Device according to claim 1, characterized in that said optical deflecting means is a reflex mirror (18) arranged in the parallel beam of light between the light emitting elements (6) and the scanning mirror (2) and that electromagnetic means are provided for alternately pivoting said reflex mirror (18) into two different angular positions.

**4.** Device according to claim 1, characterized in that the optical deflecting element is a sliding lens micrometer arranged in the parallel beam of light between the light emitting elements (6) and the scanning mirror (2) and that electromagnetic means are provided for alternately moving said sliding lens micrometer into two different positions.

**5.** Device according to one of the claims 2-4, characterized by a control unit (15) for controlling the scanning mirror (2) in such a way that four successive scan movements are made along four scan lines (51-54) between each two mutually adjacent detectors (40, 41) of the detector array (4), said four successive scan lines being spaced one from the other in a direction perpendicular to the latter.

## Revendications

**1.** Dispositif servant à former une image d'une scène, de préférence une image thermique, par une optique (1) permettant de reproduire la scène dans le plan d'un détecteur composé d'une ligne d'éléments sensibles (4), par un miroir de balayage (2) qui déplace l'image perpendiculairement à la ligne d'éléments (4) par des mouvements périodiques de va-et-vient et qui la guide, par des déplacements successifs, le long de lignes de balayage décalées perpendiculairement à la direction de balayage, par une ligne composée d'une multitude d'éléments émetteurs de lumière (6) dont chacun est relié à un élément du détecteur (4) par l'intermédiaire d'un amplificateur (5), le miroir de balayage (2) réfléchissant la lumière émise par ces éléments en direction d'un observateur (8), ainsi que par un correcteur optique (20) qui est composé d'une optique de déflexion et de moyens électriques servant à amener ladite optique en alternance dans deux positions définies et qui est disposé dans le trajet lumineux entre le miroir de balayage (2) et les éléments émetteurs (6) dont il décale le rayonnement lumineux d'un angle prédéterminé dans des sens opposés entre des lignes de balayage successives, commandé dans ce but par les signaux (14) servant à déplacer le miroir (2) pour le balayage de lignes, dispositif caractérisé en ce que le correcteur (20) est indépendant mécaniquement du miroir de balayage (2) et peut être déplacé par un mécanisme de pivotement, les signaux de commande de ce déplacement étant déduits par le mouvement de pivotement du miroir de balayage (2).

2. Dispositif selon la prétention 1, caractérisé en ce que le correcteur optique se présente sous forme d'une lame à faces parallèles (24) disposée dans le faisceau convergent entre les éléments émetteurs de lumière (6) et le miroir de balayage (2) et en ce qu'il prévoit des électro-aimants (27-30) pour le pivotement alterné de ladite lame dans deux positions angulaires distinctes.

3. Dispositif selon la prétention 1, caractérisé en ce que le correcteur optique se présente sous forme d'un réflecteur (18) disposé dans le faisceau parallèle entre les éléments émetteurs de lumière (6) et le miroir de balayage (2) et en ce qu'il prévoit des électro-aimants pour le pivotement alterné dudit réflecteur dans deux positions angulaires distinctes.

4. Dispositif selon la prétention 1, caractérisé en ce que le correcteur optique se présente sous forme d'un micromètre à lentille coulissante disposé dans le faisceau parallèle entre les éléments émetteurs de lumière (6) et le miroir de balayage (2) et en ce qu'il prévoit des électro-aimants pour le déplacement alterné d'une lentille dudit micromètre dans deux positions distinctes.

5. Dispositif selon la prétention 1 et l'une quelconque des prétentions 2 à 4, caractérisé par un moyen de commande (15) qui déplace le miroir de balayage (2) de façon à obtenir quatre mouvements de balayage successifs le long de quatre lignes (51-54) décalées perpendiculairement à la direction de balayage et situées entre des éléments voisins (40, 41) du détecteur (4).

Fig.1

Fig.2

Fig.3

Fig.4

# Fig.5

Fig. 6